# EUROPÄISCHE PATENTSCHRIFT

(11) **EP 1 372 992 B1**
(45) Veröffentlichungstag und Bekanntmachung des Hinweises auf die Patenterteilung: **08.10.2008**
(21) Anmeldenummer: 01953653.1
(22) Anmeldetag: 18.07.2001
(51) Int. Cl.: B60G 9/02

(54) **HINTERACHSAUFHÄNGUNG FÜR KRAFTFAHRZEUGE MITTELS LÄNGS- UND QUERLENKERN**
REAR-AXLE SUSPENSION FOR MOTOR VEHICLES INVOLVING THE USE OF LONGITUDINAL AND TRANSVERSE LINKS
SUSPENSION DE PONT ARRIERE POUR AUTOMOBILES, OBTENUE A L'AIDE DE BRAS OSCILLANTS LONGITUDINAUX ET TRANSVERSAUX

(30) Priorität: 23.03.2001 AT 2182001 U
(43) Veröffentlichungstag der Anmeldung: 02.01.2004
(73) Patentinhaber: MAGNA STEYR Fahrzeugtechnik AG & Co KG, 8041 Graz (AT)
(72) Erfinder: KRÖPFL, Peter, A-8071 Hausmannstätten (AT); SCHIMPL, Walter, A-8041 Graz (AT)
(74) Vertreter: Harringer, Thomas
(86) Internationale Anmeldenummer: PCT/AT2001/000242
(87) Internationale Veröffentlichungsnummer: WO 2002/076172

(56) Entgegenhaltungen:
- DE-A- 2 742 426
- DE-A- 3 634 090
- FR-A- 1 191 743

## Beschreibung

Die Erfindung betrifft eine Hinterachsaufhängung für Kraftfahrzeuge, bei der die beidseitigen Radträger mittels mindestens eines Längslenkers, eines Querlenkers und einer weiteren Führung in Querrichtung an dem Fahrzeugkörper angelenkt sind. Derartige Achsaufhängungen werden als Längs - Doppelquerlenkerachse oder als sphärische Doppelquerlenkerachse (Matschinsky: Die Radführung der Straßenfahrzeuge, Verlag TÜV Rheinland 1987, Seite 23) bezeichnet. Dabei kann es sich sowohl um eine angetriebene als auch um eine nicht angetriebene Achse handeln.

Das Eigenlenkverhalten von Einzelradaufhängungen ist üblicherweise aus fahrdynamischen Gründen untersteuernd ausgelegt, weil es sich bei Kurvenfahrt positiv auf die Fahrsicherheit auswirkt. Negativ ist dabei jedoch, dass die Lenkbewegung des Rades während des Einfederns bei Geradeausfahrt für das Fahrverhalten weniger günstig ist.

Allgemein ist jedoch eine Radaufhängung erwünscht, die bei Geradeausfahrt nur geringe Radstellungsänderung zeigt, bei Kurvenfahrt jedoch eine hohe Abstützung der Seitenkraft, entsprechend einem hohen Wankzentrum. Ebenso erwünscht ist eine merkbare Sturzänderung bei Kurvenfahrt, um die Wankbewegung des Aufbaues zu kompensieren. Weiters sollte wenn möglich unter der Seitenkraft eine Tendenz zu einer Vorspuränderung in Richtung Wankuntersteuem bestehen.

Eine derartige Hinterachsaufhängung ist aus der DE 31 36 125 C1 bekannt, wobei die weitere Führung in Querrichtung ein oberer Querlenker ist. An diesen ist ein Koppelglied angelenkt, an dem wieder die unteren Querlenker angelenkt sind. Dadurch kann erreicht werden, dass beim gleichsinngen Einfedern beider Räder nur geringe Spur- und Sturzänderungen auftreten, beim gegensinnigen Einfedern jedoch stärkere. Die Länge der Lenker bleibt dabei aber unverändert, sodass sich die Achskinematik dadurch nicht ändert. ,Nebstbei ist die Erzielung eines Seitenkraftlenkeffektes so nicht möglich.

In der DE 36 34 090 A1 ist eine nicht gattungsgemäße Hinterachsaufhängung beschrieben, bei der ein in sich starrer Achskörper radseitig an Längslenkern und mittig mittels eines Watt-Gestänges geführt ist. Diese soll dank einer Anzahl elastischer Verbindungen eine elastische Längsbewegung der Räder ohne Eigenlenkbewegungen zulassen. Dazu ist die Abstimmung der verschiedenen Elastizitäten erforderlich, was sehr schwierig ist. Im Übrigen verhält sich diese Achskonstruktion kinematisch wie eine gewöhnliche, mittels Längslenkern und Watt-Gestänge geführte Starrachse.

Aus der FR-A-1.191.743 ist eine Radaufhängung mittels eines verbindenden Querlenkers und beiderseits einer weiteren Führung in Querrichtung bekannt, wobei der Querlenker über eine Geradeführung seitlich abgestützt ist. Da kein Längslenker vorgesehen ist, erhält man so die Kinematik einer Doppelquerlenkerachse, deren untere Querlenker sehr lang sind, ohne irgendwelche Lenkeffekte.

Es ist somit Aufgabe der Erfindung, eine gattungsgemäße Hinterachsaufhängung vorzuschlagen, deren Achskinematik zwischen gleichsinnigem und gegensinnigem Einfedern unterscheidet und die auch die Einführung eines Seitenkraftlenkeffektes, insbesondere in Richtung Untersteuern, zulässt.

Erfindungsgemäß wird das dadurch erreicht, dass der Querlenker ein einziger mit den beiden Radträgern über erste Gelenke verbundener und die beiden Radträger verbindender Verbindungslenker ist, dessen Mitte mittels einer Geradführung bezüglich des Fahrzeugkörpers im Wesentlichen in der Längsmittenebene des Fahrzeuges geführt ist und dass die Längslenker fest mit den Radträgern verbunden sind. Der Verbindungslenker selbst ist nicht mittels eines Gelenkes am Fahrzeugkörper um einen festen Punkt am Fahrzeugkörper schwenkbar, sondern um einen Punkt, welcher sich relativ zum Fahrzeugkörper annähernd vertikal bewegen kann. Das heisst, dieser Punkt ist in der Fahrzeuglängsmittenebene, und somit in Fahrzeugquerrichtung, gerührt. Dadurch dass die Längslenker fest mit den Radträgern verbunden sind wird im Zusammenwirken mit dem Verbindungslenker zusätzlich noch ein Seitenkraft - Lenkeffekt erzielt, durch den das erwünschte Fahrverhalten in Kurven erreicht wird.

Der Punkt in der Mitte des Verbindungslenkers bleibt bei gegensinnigem Einfedern (durch die Seitenneigung des Fahrzeugkörpers bei Kurvenfahrt) in seiner Lage unverändert, der Verbindungslenker wirkt also wie ein in diesem Punkt in der Mitte angelenkter Querlenker; bei gleichsinnigem Einfedern wirkt er jedoch wie ein unendlich langer Querlenker; bei einseitigem Einfedern wirkt er wie ein Querlenker, dessen Länge die des ganzen Verbindungslenkers ist. Dadurch werden bei gleichsinnigem und gegensinnigem Einfedern verschiedene Radstellungsänderungen erreicht. Somit ändert sich die gesamte Achskinematik in Abhängigkeit von der Art des Einfedems.

Für die Geradeführung, oder auch nur angenäherte Geradeführung, gibt es verschiedene Möglichkeiten. Eine besonders einfache Geradeführung ist ein Watt-Gestänge, das aus zwei Schwingen und einer Koppel besteht, die im Wesentlichen in einer quer zur Fahrtrichtung vertikalen Ebene angeordnet sind (Anspruch 2). Der Punkt in der Mitte des Querlenkers daher in Fahrzeugquerrichtung geführt ist, wobei er sich normalerweise in einer Vertikalen bewegt. Um besondere fahrdynamische Effekte zu erzielen, kann von der Vertikalen auch abgewichen werden.

In einer bevorzugten Ausführungform sind die ersten Gelenke, an denen der Verbindungslenker angelenkt ist, unten an den Radträgern angeordnet und ist der Verbindungslenker in der Symmetrale der Verbindungslinie der beiden ersten Gelenke mittels eines oberhalb der Verbindungslinie angeordneten zweiten Gelenkes mit der Koppel des Watt-Gestänges verbunden (Anspruch 3). Das ergibt eine günstig hohe Lage des Rollzentrums beim gegensinnigen Einfedern und allgemein eine optimale Änderung des Radsturzes.

In einer vorteilhaften Ausführungsform der Achsaufhängung werden McPherson - Federbeine verwendet. Dann ist die weitere Führung in Querrichtung eine Teleskopführung zwischen dem Radträger und dem Fahrzeugkörper und der Längslenker ist gelenkig mit dem Radträger verbunden (Anspruch 4).

In einer bevorzugten Ausführungform ist die weitere Führung in Querrichtung ein oben am Radträger mittels eines dritten Gelenkes angreifender Querlenker und das erste Gelenk ist unter und in Fahrtrichtung hinter dem dritten Gelenk angeordnet (Anspruch 5).

Im folgenden wird die Erfindung anhand von schematischen Abbildungen eines bevorzugten Ausführungsbeispiels der Erfindung beschrieben und erläutert. Es ist:
- Fig. 1:: Eine axonometrische Darststellung,
- Fig. 2:: Eine horizontale Ansicht von hinten,
- Fig. 3:: Eine vertikale Ansicht von oben,
- Fig. 4:: Eine axonometrische Darststellung einer abgewandelten Ausführungsform, siehe Anspruch 4.

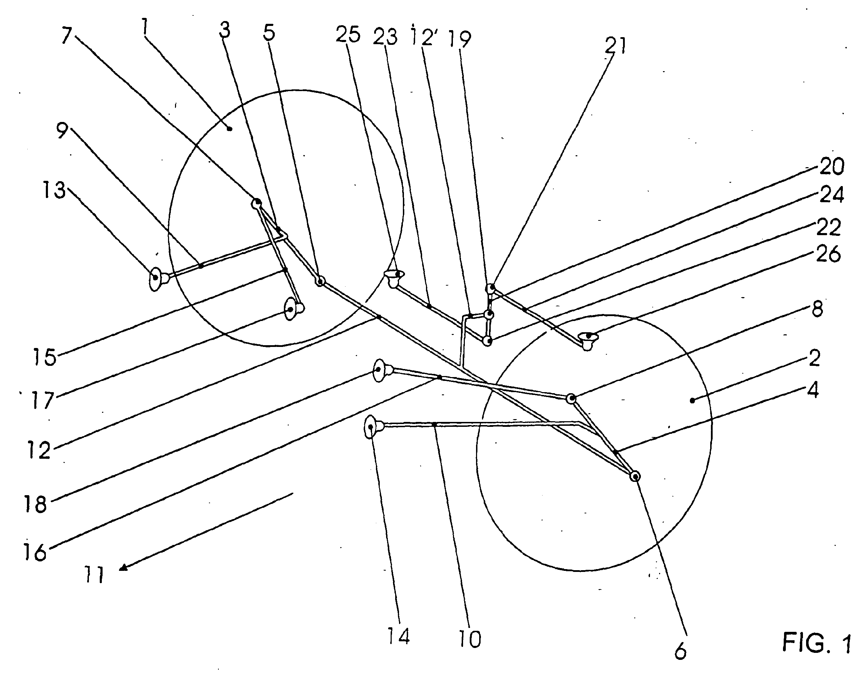

In Fig. 1, 2 und 3 sind die Räder 1, 2 nur angedeutet, sie sind in beliebiger Weise in Radträgern 3, 4 gelagert. Die Radträger 3, 4 sind hier schematisch nur als Stäbe eingezeichnet, sind in Wirklichkeit aber räumliche Gebilde. An den Radträgern 3, 4 sind unten erste Gelenke 5, 6 und oben dritte Gelenke 7, 8 vorgesehen. An den Radträgern 3, 4 greifen weiters noch Längslenker 9, 10 an. Sie sind hier einstückig mit den Radträgern 3, 4 ausgeführt bzw mit diesen verbunden; sie könnten in einer von einer McPherson - Aufhängung abgeleiteten Aufhängung auch gelenkig mit dem Radträger verbunden sein. Die Längslenker 9, 10 erstrecken sich von den Radträgern 3, 4 nach vorne, siehe Fahrtrichtungspfeil 11. Mit 12 ist allgemein der Querlenker bezeichnet, siehe weiter unten.

Die Längslenker 9, 10 sind in Lagern 13, 14 am nicht dargestellten Fahrzeugkörper angelenkt. Diese Lager sind beispielsweise Kugelgelenke. An den dritten Gelenken 7, 8 sind obere Querlenker 15, 16 angelenkt, die in Lagern 17, 18 am Fahrzeugkörper geführt sind, beispielsweise mittels Kugelgelenken. Die oberen Querlenker 15, 16 stellen eine weitere Führung in Querrichtung dar, die weitgehend unabhängig von der Erfindung beliebig ausgebildet sein kann.

Der Querlenker 12 ist als Verbindungslenker zwischen den beiden Radträgern 3,4 ausgebildet und greift an deren ersten Gelenken 5, 6 an. Er folgt im gezeigten Schema der Verbindungslinie zwischen diesen beiden Gelenken, kann aber zwischen den Gelenken eine aus dieser Verbindungslinie weit heraustretende Gestalt haben. Er besitzt in der Mitte einen galgenförmigen Ansatz 12', der mit dem Verbindungslenker 12 einstückig oder fest verbunden ist. Die beiden Balken des galgenförmigen Ansatzes 13 liegen in der Längsmittenebene des Fahrzeuges. An seinem Ende ist ein zweites Gelenk 19 vorgesehen, an dem ein Punkt, die Spitze des Galgens 12', im wesentlichen in vertikaler Richtung geführt ist. Dadurch kann der Querlenker 12 Kräfte in Fahrzeugquerrichtung aufnehmen. Dazu ist im gezeigten Ausführungsbeispiel ein Watt-Gestänge gewählt, das besteht aus: einer Koppel 20, mit Koppelgelenken 21, 22 und Schwingen 23, 24, die in Lagern 25, 26 am Fahrzeugkörper angelenkt sind. In der Mitte der Koppel 20 sitzt das zweite Gelenk 14.

Durch die Führung des zweiten Gelenkes 19 am Watt-Gestänge 20 bis 24 wird erreicht, dass dessen Punkt des Verbindungslenkers 12 bei gegensinni-gem Einfedern in seiner Lage unverändert bleibt, also wie ein in diesem Punkt angelenkter Querlenker wirkt; dass er bei einseitigem Einfedern wie ein Querlenker wirkt, dessen Länge die des ganzen Verbindungslenkers 12 ist; und dass er bei gleichsinnigem Einfedern wie ein unendlich langer Querlenker wirkt. Dadurch werden bei gleichsinnigem und gegensinnigem Einfedern verschiedene Radstellungsänderungen erreicht. Somit ändert sich die gesamte Achskinematik in Abhängigkeit von der Art des Einfederns.

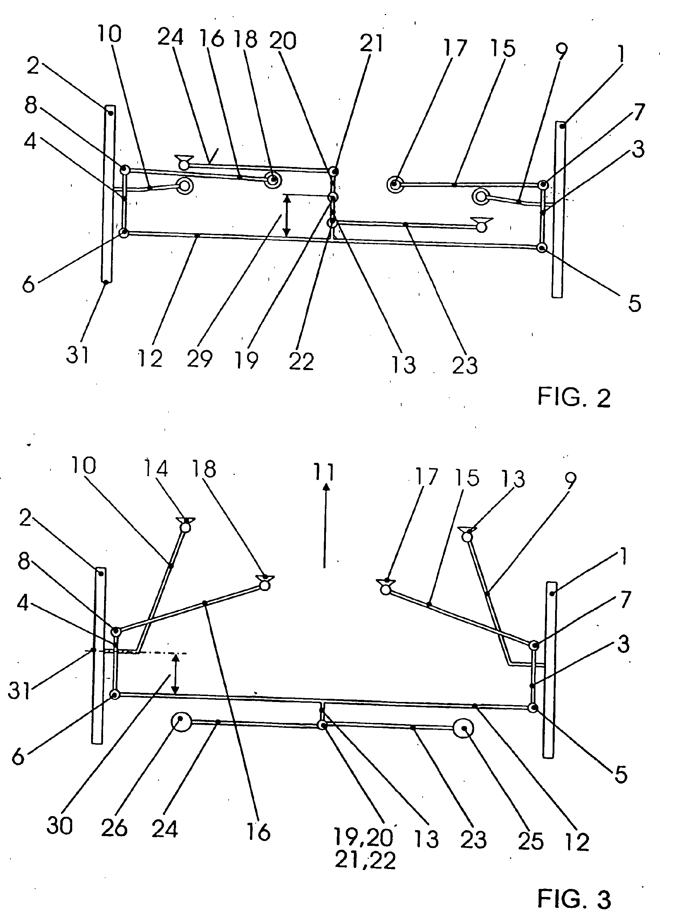

Durch die Höhendifferenz 29 (Fig.2) ist diese Änderung besonders vorteilhaft. Durch den Abstand 30 (Fig. 3) in Längsrichtung zwischen Radaufstandspunkt 31 und ersten Gelenken 5, 6 wird zusätzlich noch ein erwünschter Seitenkraftlenkeffekt erzielt. Ersteres verbessert den Geradeauslauf bei gleichzeitigem Einfedern, zweiteres die Kurvengängigkeit. Im Rahmen der Erfindung sind von dem beschriebenen Ausführungsbeispiel abweichende Lösungen, insbesondere den Radträger, die Längslenker und die weitere Führung in Querrichtung (obere Querlenker) und deren Verbindung mit dem Radträger betreffend, möglich.

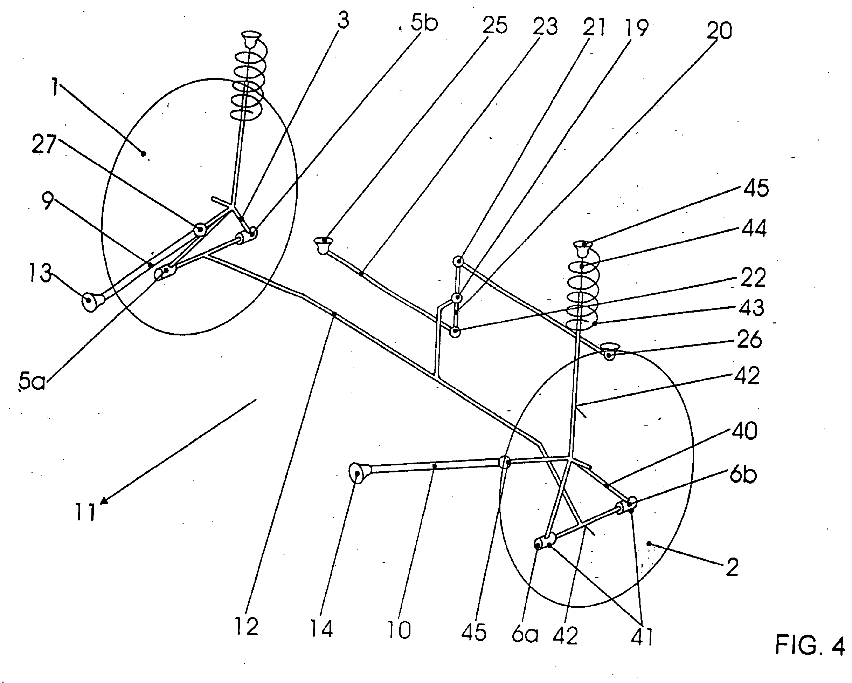

Die Ausführungsform der Fig. 4 unterscheidet sich von der der vorhergehenden Figuren dadurch, dass es sich um eine Aufhängung mit Teleskopführung des Radträgers, auch unter dem Namen McPherson - Federbein bekannt, handelt. Der Radträger 40 hat an seinem unteren Ende zwei Gelenke 41 in einigem Abstand in Fahrzeuglängsrichtung, in denen ein Querhaupt 42 des Verbindungslenkers gelagert ist, um ein Verdrehen des Radträgers um eine vertikale Achse zu verhindern. Der Längslenker 10 ist über ein Gelenk 45 mit dem Radträger 40 verbunden.

Der Radträger 40 setzt sich nach oben in einer annähernd ersten vertikalen Stange 42 fort, die zusammen mit einer koachsialen und am Fahrzeugkörper in einem Auflager 45 abgestützen zweiten vertikalen Stange 44 eine Teleskopführung bildet. Sie ist gewöhnlich als Dämpfungsbein ausgebildet und von einer Schraubenfeder 43 umgeben, die zwischen der ersten vertikalen Stange 42 und dem Auflager 45 als Druckfeder wirkt. Die Führung des Verbindungslenkers mit seinen beiden Querhäuptern durch das Wattgestänge 19 bis 24 ist wie zu Fig. 1 bis 3 beschrieben.

Die Erfindung kann somit auf verschiedene Achsführungen angewendet werden.

## Patentansprüche

1. Hinterachsaufhängung für Kraftfahrzeuge bei der die beidseitigen Radträger mittels mindestens eines Längslenkers, eines Querlenkers und einer weiteren Führung in Querrichtung an dem Fahrzeugkörper angelenkt sind, **dadurch gekennzeichnet, dass** der Querlenker (12) ein einziger mit den beiden Radträgern (3,4; 40) über erste Gelenke (5,6; 41) verbundener und die beiden Radträger (3,4; 40) verbindender Verbindungslenker ist, dessen Mitte mittels einer Geradeführung (20 bis 24) bezüglich des Fahrzeugkörpers im Wesentlichen in der Längsmittenebene des Fahrzeuges geführt ist und dass die Längslenker (9,10) fest mit den Radträgern (3,4) verbunden sind.

2. Hinterachsaufhängung nach Anspruch 1, **dadurch gekennzeichnet, dass** die Geradeführung (20 bis 24) ein Watt-Gestänge ist, das aus zwei Schwingen (23,24) und einer Koppel (20) besteht, die in einer quer zur Fahrtrichtung im Wesentlichen vertikalen Ebene angeordnet sind.

3. Hinterachsaufhängung nach Anspruch 2, **dadurch gekennzeichnet, dass** die ersten Gelenke (5,6; 41), an denen der Verbindungslenker (12) angelenkt ist, unten an den Radträgern (3,4; 40) angeordnet sind und der Verbindungslenker (12) in der Mittenebene der Verbindungslinie der beiden ersten Gelenke (5,6) mittels eines oberhalb der Verbindungslinie angeordneten zweiten Gelenkes (19) mit der Koppel (20) des Watt-Gestänges verbunden ist.

4. Hinterachsaufhängung nach Anspruch 1, **dadurch gekennzeichnet, dass** die weitere Führung in Querrichtung eine Teleskopführung (42,43) zwischen dem Radträger (40) und dem Fahrzeugkörper ist. (Fig.4)

5. Hinterachsaufhängung nach Anspruch 1, **dadurch gekennzeichnet, dass**, die weitere Führung in Querrichtung ein oben am Radträger mittels eines dritten Gelenkes (7,8) angreifender Querlenker (15,16) und das erste Gelenk (5,6) unter (Abstand 29) und in Fahrtrichtung hinter (Abstand 30) dem dritten Gelenk (7,8) angeordnet ist.

## Claims

1. Rear-axle suspension system for motor vehicles, in which suspension system the wheel carriers on both sides are articulated on the vehicle body by means of at least one longitudinal link, one transverse link and one further guide in the transverse direction, **characterized in that** the transverse link (12) is a single connecting link which is connected to the two wheel carriers (3, 4; 40) via first joints (5, 6; 41), connects the two wheel carriers (3, 4; 40), and the centre of which is guided, with regard to the vehicle body, substantially in the longitudinal centre plane of the vehicle by means of a rectilinear guide (20 to 24), and **in that** the longitudinal links (9, 10) are connected fixedly to the wheel carriers (3, 4).

2. Rear-axle suspension system according to Claim 1, **characterized in that** the rectilinear guide (20 to 24) is a Watt linkage which comprises two rockers (23, 24) and a coupler (20) which are arranged in a substantially vertical plane which is transverse with respect to the driving direction.

3. Rear-axle suspension system according to Claim 2, **characterized in that** the first joints (5, 6; 41), on which the connecting link (12) is articulated, are arranged on the wheel carriers (3, 4; 40) at the bottom, and the connecting link (12) is connected to the coupler (20) of the Watt linkage in the centre plane of the connecting line of the two first joints (5, 6) by means of a second joint (19) which is arranged above the connecting line.

4. Rear-axle suspension system according to Claim 1, **characterized in that** the further guide in the transverse direction is a telescopic guide (42, 43) between the wheel carrier (40) and the vehicle body (Fig. 4).

5. Rear-axle suspension system according to Claim 1, **characterized in that** the further guide in the transverse direction is a transverse link (15, 16) which acts on the wheel carrier at the top by means of a third joint (7, 8), and the first joint (5, 6) is arranged below (spacing 29) and behind (spacing 30) the third joint (7, 8) in the driving direction.

## Revendications

1. Suspension de pont arrière pour véhicules automobiles, dans laquelle les supports de roue des deux côtés sont articulés à la caisse du véhicule au moyen d'au moins un bras oscillant longitudinal, d'un bras oscillant transversal et d'un autre guidage dans la direction transversale, **caractérisée en ce que** le bras oscillant transversal (12) est un bras oscillant de liaison unique connecté aux deux supports de roue (3, 4 ; 40) par le biais de premières articulations (5, 6 ; 41) et reliant les deux supports de roue (3, 4 ; 40), dont le centre est guidé au moyen d'un guidage droit (20 à 24) par rapport à la caisse du véhicule essentiellement dans le plan médian longitudinal du véhicule, et **en ce que** les bras oscillants longitudinaux (9, 10) sont connectés fixement aux supports de roue (3, 4).

2. Suspension de pont arrière selon la revendication 1, **caractérisée en ce que** le guidage droit (20 à 24) est une tringlerie de Watt qui se compose de deux fourches oscillantes (23, 24) et d'une barre de liaison (20), qui sont disposées dans un plan essentiellement vertical transversalement à la direction de conduite.

3. Suspension de pont arrière selon la revendication 2, **caractérisée en ce que** les premières articulations (5, 6 ; 41) auxquelles le bras oscillant de liaison (12) est articulé, sont disposées au-dessous des supports de roue (3, 4 ; 40) et le bras oscillant de liaison (12) est connecté à la barre de liaison (20) de la tringlerie de Watt dans le plan médian de la ligne de connexion des deux premières articulations (5, 6) au moyen d'une deuxième articulation (19) disposée au-dessus de la ligne de connexion.

4. Suspension de pont arrière selon la revendication 1, **caractérisée en ce que** le guidage supplémentaire dans la direction transversale est un guidage télescopique (42, 43) entre le support de roue (40) et la caisse du véhicule. (fig.4)

5. Suspension de pont arrière selon la revendication 1, **caractérisée en ce que** le guidage supplémentaire dans la direction transversale est un bras oscillant transversal (15, 16) venant en prise avec le dessus du support de roue au moyen d'une troisième articulation (7, 8) et la première articulation (5, 6) est disposée en dessous de (distance 29) et, dans la direction de conduite, derrière (distance 30), la troisième articulation (7, 8).
